# FASCICULE DE BREVET EUROPEEN

(11) **EP 0 995 681 B1**
(45) Date de publication et mention de la délivrance du brevet: **13.12.2006**
(21) Numéro de dépôt: 99402411.5
(22) Date de dépôt: 01.10.1999
(51) Int. Cl.: B65B 25/14, B65G 47/64, B65G 47/71

(54) **Unité de fabrication et d'emballage de produits en rouleaux**
Anlage zum Herstellen und Verpacken von rollenförmigen Gegenständen
Unit for manufacturing and packaging roll-shaped articles

(30) Priorité: 06.10.1998 FR 9812471
(43) Date de publication de la demande: 26.04.2000
(73) Titulaire: Georgia-Pacific France, 68320 Kunheim (FR)
(72) Inventeur: Ruemeli, Robert, 68280 Sundhoffen (FR)
(74) Mandataire: Cortier, Sophie

(56) Documents cités:
- EP-A- 0 654 407
- EP-A- 0 666 230
- FR-A- 2 738 231
- US-A- 4 440 289
- US-A- 4 705 152

## Description

L'invention concerne une unité de fabrication et d'emballage.

L'invention concerne plus particulièrement une unité de fabrication et d'emballage en série de produits en rouleaux notamment de papier tissue ou d'ouate de cellulose à usage sanitaire ou domestique. Cette unité comporte, d'amont en aval, un poste de découpe destiné à couper des rouleaux successifs de grande longueur et d'un diamètre donné en trains successifs espacés ou non de plusieurs rouleaux de plus petite longueur, et un convoyeur amont pour acheminer les trains de rouleaux du poste de découpe à un poste de répartition, qui distribue train par train les rouleaux à plusieurs postes d'emballage automatisés.

On connaît de nombreux exemples d'unités de fabrication de produits en rouleaux à usage sanitaire ou domestique.

Le principe de telles unités de fabrication est de réaliser simultanément sur une seule chaîne de fabrication toutes les étapes de la réalisation de rouleaux, depuis le chargement des rouleaux de grande longueur appelés « logs », jusqu'à l'emballage des rouleaux découpés en plus petite longueur.

De nombreux types de postes de découpe existent. Il s'agit globalement de procédés faisant intervenir des scies à bandes ou des scies circulaires à disques, destinés à garantir une découpe régulière du log et des rouleaux définitifs.

Après passage dans le poste de découpe, les trains de rouleaux issus des logs sont acheminés par convoyage vers un ou plusieurs postes d'emballage.

Un problème se pose généralement lors de l'acheminement des rouleaux du poste de découpe au poste d'emballage, car les systèmes de répartition connus ont l'inconvénient de favoriser l'accumulation de rouleaux, voire le "bourrage", pouvant entraîner l'arrêt de l'unité de fabrication.

Pour éviter que les rouleaux non encore emballés ne s'accumulent dans le système de convoyage, on a imaginé d'associer à la sortie de l'unité de découpe un poste de répartition, qui est chargé de répartir les rouleaux non encore emballés entre plusieurs postes d'emballage.

Généralement, les postes de répartition ainsi associés au dispositif de convoyage comportent un dispositif de sélection dont le rôle est d'orienter les rouleaux vers plusieurs convoyeurs aval menant chacun à un poste d'emballage.

Ceci peut par exemple être réalisé par un poste de répartition similaire à celui décrit dans le document US-A-4.440.289.

Le poste de répartition de ce document est intégré à un convoyeur amont qui est un tapis roulant central, au dessus duquel est agencé un volet, qui est monté en rotation autour d'un axe parallèle à la direction longitudinale du tapis roulant central et qui est susceptible de chasser les rouleaux d'un côté ou de l'autre du tapis roulant central en direction de plusieurs convoyeurs aval, pour répartir et équilibrer la charge de rouleaux admissible par les postes d'emballage.

Toutefois, cette disposition présente plusieurs inconvénients majeurs.

En effet, le poste de répartition ne peut chasser qu'un nombre restreint de rouleaux à la fois, le tapis central arrêtant momentanément chaque rouleau en regard du volet préalablement à son déchargement, ce qui ralentit la vitesse globale d'acheminement des rouleaux dans l'unité de fabrication. De plus, le contact direct du volet sur les rouleaux risque de les déformer ou de les salir, ce qui est hautement préjudiciable à leur commercialisation ultérieure.

Pour remédier à cet inconvénient, l'invention propose un poste de répartition éliminant les contacts entre le poste de répartition et les rouleaux et ne ralentissant pas la vitesse d'acheminement des rouleaux dans l'unité de fabrication.

Dans ce but, l'invention propose une unité de fabrication du type décrit ci-dessus, caractérisée en ce qu'un système d'aiguillages du poste de répartition permet d'orienter chaque train de rouleaux vers une série déterminée de postes d'emballage différente de celle vers laquelle a été orientée le train de rouleaux précédent, et en ce que

le convoyeur amont est sensiblement horizontal et entraîne indépendamment les trains de rouleaux dans une direction donnée à une vitesse contrôlée par rapport à la vitesse des trains à la sortie du poste de découpe pour séparer les trains avec un espacement minimum facilitant leur aiguillage. Selon d'autres caractéristiques de l'invention :
- le système d'aiguillages comporte une série de lames verticales mobiles simultanément en rotation autour d'axes verticaux parallèles, qui sont parallèles les unes aux autres, qui sont espacées de la largeur d'un rouleau, et qui sont susceptibles d'occuper, d'un train de rouleaux au suivant, deux positions angulaires distinctes par rapport à la direction d'avancement du convoyeur pour orienter les rouleaux d'un même train vers une série ou une autre de convoyeurs aval, associée à la position angulaire considérée, les convoyeurs aval acheminant les rouleaux vers une série de postes d'emballage associée à la position angulaire considérée ;
- le système d'aiguillages comporte une série de plaques verticales, fixes, parallèles et espacées de la largeur d'un rouleau, entre lesquelles sont agencées perpendiculairement des convoyeurs intermédiaires qui sont mobiles en rotation autour d'un axe horizontal, qui sont coplanaires, et qui sont susceptibles d'occuper simultanément, d'un train de rouleaux au suivant, deux positions angulaires différentes pour orienter les rouleaux d'un même train vers l'une ou l'autre de deux séries de convoyeurs aval, réparties sur deux niveaux, chaque série de convoyeurs aval associée à chaque position angulaire considérée acheminant les rouleaux vers une série de postes d'emballage associée à la position angulaire considérée ;
- l'unité de fabrication comporte une unité de commande qui reçoit des informations en provenance d'éléments de l'unité de fabrication et commande d'autres éléments de l'unité de fabrication ;
- l'unité de commande reçoit un signal représentatif de la vitesse des rouleaux en sortie du poste de découpe, et un signal de passage des trains de rouleaux ;
- l'unité de commande calcule la distance entre deux trains de rouleaux successifs, puis, sous l'action d'un programme interne, commande la position angulaire des lames ou des convoyeurs intermédiaires et la vitesse du convoyeur amont.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de dessus d'une unité de fabrication selon un premier mode de réalisation de l'invention, comportant un poste de répartition horizontale,
- la figure 2 est une vue schématique de côté d'une unité de fabrication selon un premier mode de réalisation de l'invention, comportant un poste de répartition verticale,
- la figure 3 est une vue de dessus d'une unité de fabrication selon la figure 2, et
- la figure 4 est un schéma de principe d'une unité de commande de l'unité de fabrication.

Dans la description qui va suivre, des chiffres de référence identiques désignent des pièces identiques ou ayant des fonctions similaires.

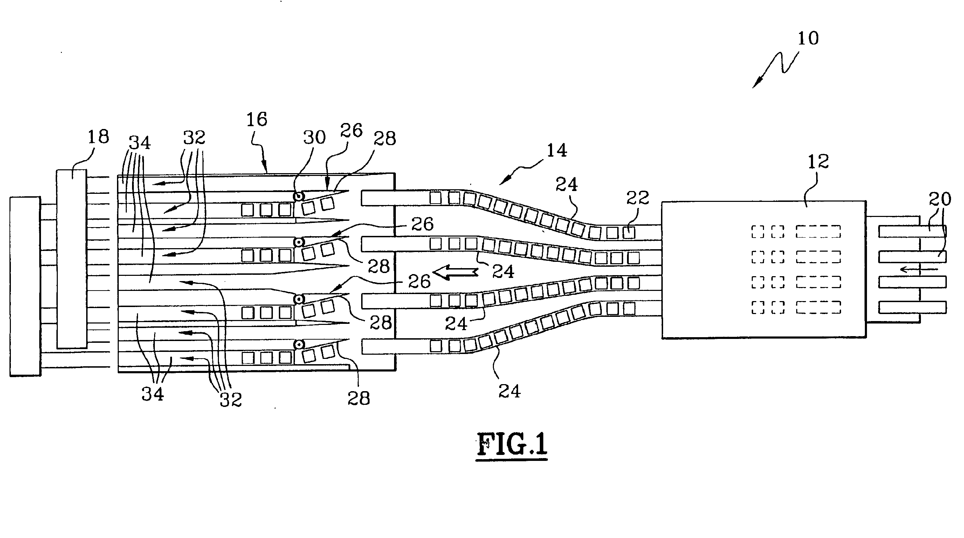

On voit sur la figure 1 l'unité 10 de fabrication et d'emballage en série de produits en rouleaux réalisée conformément à un premier mode de réalisation de l'invention.

De manière connue, l'unité 10 comporte un poste de découpe 12, un convoyeur amont 14, un poste de répartition 16 et des postes 18 automatisés d'emballage.

Dans le cadre d'une fabrication en grande série de rouleaux, notamment de rouleaux d'ouate de cellulose et dans l'exemple représenté, quatre « logs » 20 sont introduits en parallèle, suivant la flèche, en amont du poste de découpe 12 qui en réalise la coupe pour obtenir des rouleaux 22 du même diamètre et de plus petite longueur.

Les rouleaux 22 sortent du poste de découpe 12 par "trains" successifs, chaque train correspondant au résultat de la découpe d'un log 20. Les trains de rouleaux adjacents 22 sont acheminés par le convoyeur 14 vers un poste de répartition 16 qui les amène en direction des postes d'emballage 18, ces derniers postes constituant la phase finale du processus de fabrication, préalablement à l'expédition des paquets de rouleaux 22.

Le poste de découpe 12 peut, par exemple, être constitué d'une scie comportant plusieurs disques de découpe ou encore une scie comportant plusieurs bandes de découpe, et qui permet de découper les « logs » 20 en rouleaux 22.

Conformément à l'invention, le convoyeur 14, représenté à la figure 1 en vue de dessus, est un convoyeur sensiblement horizontal qui comporte des lignes adjacentes de convoyage 24, chaque ligne de convoyage 24 récupérant les rouleaux 22 en sortie du poste de découpe 12 pour les acheminer vers le poste de répartition 16. Chaque ligne de convoyage 24 est associée à des rouleaux 22 occupant toujours la même position longitudinale en sortie du poste de découpe 12.

Avantageusement, le convoyeur 14 peut ainsi être constitué d'un ensemble de lignes de convoyage 24 formées par des tapis roulants, des convoyeurs à écailles, des lignes de cylindres motorisés, ou tout autre système de convoyage.

Dans le cadre d'une fabrication en grande série, le poste de découpe 12 coupe en continu les logs 20, de sorte qu'un log 20 succède immédiatement à un autre dans le poste de découpe 12. Il en résulte qu'en sortie du poste de découpe 12, les trains de rouleaux 22 se succèdent à cadence élevée avec un espacement ou non selon le système de découpe.

Conformément à l'invention, le convoyeur 14, qui achemine les trains de rouleaux 22 de la sortie du poste de découpe 12 à l'entrée du poste de répartition 16, est avantageusement entraîné à une vitesse contrôlée pour garder ou donner le cas échéant un espacement suffisant entre deux trains successifs de rouleaux au niveau de l'aiguillage 28.

On profite de l'espacement des trains de rouleaux 22 ainsi obtenu ou maintenu selon le cas pour actionner l'aiguillage. Ainsi aucun produit n'est touché par les moyens d'aiguillage et la régularité du débit n'est pas affectée.

Avantageusement, le poste de répartition 16 comporte un système d'aiguillages 26 qui permet d'orienter chaque train de rouleaux 22 vers une série déterminée de postes d'emballage 18 qui est différente de celle vers laquelle a été orienté le train de rouleaux 22 précédent. Pour ce faire, chaque aiguillage 26 est constitué d'une paire de lames verticales 28, qui est mobile en rotation, et qui est destinée à pouvoir occuper au moins deux positions angulaires différentes.

A cet effet, les lames 28 sont toutes articulées en rotation autour d'axes verticaux parallèles 30 et, dans le mode de réalisation préféré de l'invention, les lames 28 sont parallèles les unes aux autres et mobiles simultanément autour des axes 30 entre deux positions angulaires extrêmes prédéfinies. Cette configuration n'est pas limitative de l'invention et les lames 28 pourraient occuper trois ou plus positions angulaires prédéfinies.

Selon un autre mode de réalisation de l'invention les lames sont disposées en aval de leur axe de rotation. Cette disposition est plus avantageuse lorsqu'il s'agit de répartir chaque flux vers plus de deux voies

Les lames verticales 28 définissent des entrées de chemins 32, qui sont destinés à diriger les rouleaux 22 vers les postes d'emballage 18 selon la direction longitudinale de défilement des rouleaux successifs. Ainsi, lors du fonctionnement du poste de répartition 16, un train de rouleaux 22 est susceptible d'être orienté vers une série de chemins 32 différente de la série de chemins 32 associée au train de rouleaux 22 précédent, de sorte que les trains de rouleaux 22 sont orientés vers un poste d'emballage 18 différent de celui vers lequel est orienté le train de rouleaux précédent, chaque rouleau étant guidé entre deux lames 22 parallèles.

En aval du système d'aiguillages 26, les chemins 32 comportent chacun un convoyeur aval 34 associé à un poste d'emballage 18. Avantageusement, les convoyeurs aval 34 sont eux aussi constitués de tapis roulants, de lignes de cylindres motorisées, ou d'un quelconque autre moyen de convoyage.

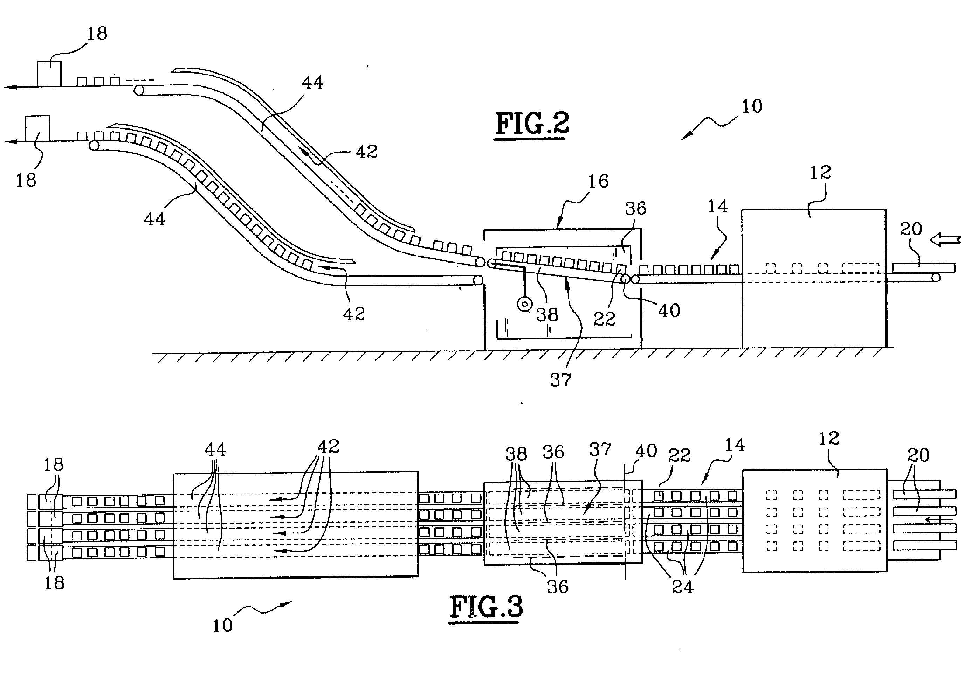

Les figures 2 et 3 illustrent un second mode de réalisation de l'invention dans lequel le poste de répartition 16 réalise l'orientation des trains de rouleaux 22 entre deux postes d'emballage 18 qui ne sont plus situés dans un même plan horizontal, comme décrit précédemment en référence à la figure 1, mais qui sont agencées verticalement sur deux niveaux.

D'une façon analogue au premier mode de réalisation, l'unité 10 de fabrication comporte un poste de découpe 12 et le convoyeur amont 14 comporte des lignes de convoyage 24 qui entraînent les rouleaux 22 à une vitesse contrôlée par rapport à la vitesse des rouleaux 22 en sortie du poste de découpe 12.

Conformément à l'invention, et d'une façon analogue à celle décrite en référence au premier mode de réalisation de l'invention, le poste de répartition 16 comporte un système d'aiguillages 37 constitué d'un convoyeur mobile comprenant une série de plaques verticales 36, fixes, parallèles, et longitudinales, qui sont espacées de la largeur d'un rouleau 22 pour permettre un guidage des rouleaux 22 selon la direction longitudinale de défilement du flux de rouleaux 22. Entre ces plaques verticales 36, et perpendiculairement à celles-ci, sont agencés des convoyeurs intermédiaires 38 qui sont tous coplanaires et simultanément mobiles globalement en rotation autour d'un axe horizontal 40, de sorte que les convoyeurs intermédiaires 38 sont susceptibles d'occuper simultanément, d'un train de rouleaux 22 au suivant, au moins deux positions angulaires extrêmes différentes. Cette disposition n'est pas limitative de l'invention et l'ensemble des convoyeurs intermédiaires 38 pourrait occuper plus de deux positions angulaires prédéfinies.

De la sorte, et d'une façon analogue à celle décrite en référence à la figure 1, un train de rouleaux 22 est susceptible, en sortie du poste de répartition 16, d'être orienté par le système d'aiguillages 37 vers une série de chemins 42 différente de celle qui a acheminé le train de rouleaux 22 précédent, chaque chemin 42 étant, d'une façon analogue à celle décrite en référence au premier mode de réalisation, constitué d'un convoyeur aval 44 réalisé à l'aide d'un tapis roulant, d'une ligne de cylindres motorisés ou d'un quelconque autre moyen de convoyage. Chaque série de chemins 42 achemine les rouleaux 22 vers deux postes d'emballage 18.

Avantageusement, ce deuxième mode de réalisation permet de réduire considérablement l'encombrement au sol dévolu à une telle unité 10 de fabrication, l'encombrement au sol d'une telle unité 10 étant sensiblement plus restreint que l'encombrement au sol décrit en référence au premier mode de réalisation de l'invention.

Avantageusement, l'invention n'est pas limitée à un unique poste 16 de répartition, et il est parfaitement possible de combiner plusieurs postes 16 de répartition successifs pour augmenter le nombre de postes d'emballage 18 disponibles, et ce faisant augmenter la cadence de fabrication des rouleaux 22. Il est par exemple possible de combiner deux postes de répartition 16 d'un même type, ce qui conduit dans le cadre du premier mode de réalisation à une augmentation de la surface au sol de l'unité 10 de fabrication et, dans le deuxième mode de réalisation, à une augmentation de l'encombrement vertical de l'unité 10 de fabrication, mais il est aussi possible de combiner deux types différents de postes de répartition 16.

En effet, il est possible de combiner avantageusement un poste de répartition 16 à répartition verticale à deux postes d'emballage 16 à répartition horizontale de façon à obtenir une unité 10 de fabrication de grande capacité sur deux niveaux.

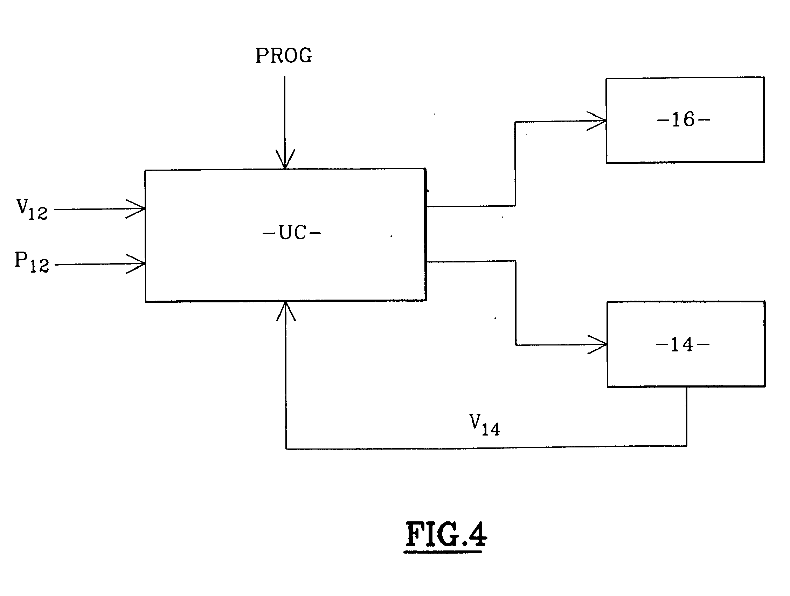

Sur le schéma de la figure 4 est illustré le principe d'une unité UC de commande de l'unité 10 de fabrication. De manière connue, l'unité de commande UC est susceptible d'obéir à un programme PROG de marche de l'unité 10 de fabrication. L'unité de commande UC reçoit des informations en provenance du poste de découpe 12 telles qu'un signal V₁₂ représentatif de la vitesse de sortie des trains de rouleaux 22 en sortie du poste de découpe 12, et un signal de passage P₁₂ à chaque passage d'un train de rouleaux 22 en sortie du poste de découpe 12. En fonction de ces signaux V₁₂ et P₁₂ et du programme PROG, l'unité de commande UC calcule la distance entre deux trains consécutifs de rouleaux 22 et contrôle le poste de répartition 16 en agissant, en fonction du mode de réalisation, soit sur la position du système d'aiguillages 26, soit sur la position du système d'aiguillages 37, et sur la vitesse du convoyeur amont 14 de façon à obtenir ou maintenir l'espacement adéquat entre deux trains de rouleaux 22. Le convoyeur amont 14 est par ailleurs susceptible de retourner un signal V₁₄ représentatif de la vitesse d'acheminement des trains de rouleaux 22 pour que l'unité de commande UC puisse réaliser un asservissement en temps réel du poste de répartition 16 et du convoyeur amont 14. De la sorte, l'unité de commande UC se présente comme un moyen de contrôle et de commande en continu des flux de fabrication des rouleaux 22.

## Revendications

1. Unité (10) de fabrication et d'emballage en série de produits en rouleaux, notamment de papier, du type qui comporte, d'amont en aval, un poste de découpe (12) destiné à couper des logs (20) successifs de grande longueur et d'un diamètre donné en trains successifs de plusieurs rouleaux (22) adjacents de plus petite longueur, et un convoyeur amont (14) pour acheminer les trains de rouleaux (22) du poste de découpe (12) à un poste de répartition (16), qui distribue les rouleaux (22) à plusieurs postes d'emballage (18) automatisés, **caractérisée en ce qu'**un système d'aiguillages (26, 37) du poste de répartition (16) permet d'orienter à flux continu et régulier chaque train de rouleaux (22) vers une série déterminée de postes d'emballage (18) différente de celle vers laquelle a été orienté le train de rouleaux (22) précédent et **en ce que** le convoyeur amont (12) est sensiblement horizontal et entraîne indépendamment les trains de rouleaux (22) dans une direction donnée à une vitesse contrôlée par rapport à la vitesse des trains à la sortie du poste de découpe (12) pour séparer les trains avec un espacement minimum facilitant leur aiguillage

2. Unité (10) de fabrication et d'emballage selon la revendication 1, **caractérisée en ce que** le système d'aiguillages comporte une série de lames (28) verticales mobiles simultanément en rotation autour d'axes (30) verticaux parallèles, qui sont parallèles les unes aux autres, et qui sont susceptibles d'occuper, d'un train de rouleaux (22) au suivant, deux ou plusieurs positions angulaires distinctes par rapport à la direction d'avancement du convoyeur (14) pour orienter les rouleaux (22) d'un même train vers un série ou une autre de convoyeurs aval (34), associée à la position angulaire considérée, les convoyeurs aval (34) acheminant les rouleaux (22) vers une série de postes d'emballage (18) associée à la position angulaire considérée.

3. Unité (10) de fabrication et d'emballage selon la revendication 1, **caractérisée en ce que** le système d'aiguillages (37) comporte une série de guides en forme de plaques (36) verticales, fixes, parallèles et espacées de la largeur d'un rouleau (22), entre lesquelles sont agencés perpendiculairement des convoyeurs intermédiaires (38) qui sont mobiles en rotation autour d'un axe horizontal (40), qui sont coplanaires, et qui sont susceptibles d'occuper simultanément, d'un train de rouleaux (22) au suivant, deux ou plusieurs positions angulaires différentes pour orienter les rouleaux (22) d'un même train vers l'une ou l'autre de deux séries de convoyeurs aval (44), réparties sur deux niveaux, chaque série de convoyeurs aval (44) associée à chaque position angulaire considérée acheminant les rouleaux (22) vers une série de postes d'emballage (18) associée à la position angulaire considérée.

4. Unité (10) de fabrication et d'emballage selon l'une quelconque des revendications 2 ou 3, **caractérisée en ce qu'**elle comporte une unité de commande (UC) qui reçoit des informations en provenance d'éléments de l'unité (10) de fabrication et commande d'autres éléments de l'unité (10) de fabrication.

5. Unité (10) de fabrication et d'emballage selon la revendication 4, **caractérisée en ce que** l'unité de commande (UC) reçoit au moins un signal (V₁₂) représentatif de la vitesse des rouleaux (22) en sortie du poste (12) de découpe, et un signal de passage (P₁₂) des trains de rouleaux (22).

6. Unité (10) de fabrication selon les revendications 4 et 5, **caractérisée en ce que** l'unité de commande (UC) calcule la distance entre deux trains de rouleaux (22) successifs, puis, sous l'action d'un programme interne (PROG), commande la position angulaire des lames (28) ou des convoyeurs intermédiaires (37) et la vitesse du convoyeur amont (14).

## Claims

1. Unit (10) for the mass production and packaging of products in the form of rolls, particularly paper rolls, of the type which comprises, from upstream to downstream, a cutting station (12) intended for cutting successive logs (20) of long length and of a given diameter into successive trains made up of a number of adjacent rolls (22) of shorter length, and an upstream conveyor (14) for conveying the trains of rolls (22) from the cutting station (12) to a distribution station (16), which distributes the rolls (22) to a number of automated packaging stations (18), **characterized in that** a system of switches (26, 37) of the distribution station (16) makes it possible to direct each train of rolls (22) as a continuous and regular flow towards a defined series of packaging stations (18) which is different from that series towards which the preceding train of rolls (22) was directed, and **in that** the upstream conveyor (12) is substantially horizontal and independently drives the trains of rolls (22) in a given direction at a speed which is controlled with respect to the speed of the trains leaving the cutting station (12), in order to separate the trains with a minimum spacing to facilitate their switching.

2. Production and packaging unit (10) according to Claim 1, **characterized in that** the system of switches comprises a series of vertical blades (28) which can rotate simultaneously about parallel vertical shafts (30), these blades being parallel to one another and being able to occupy, from one train of rolls (22) to the next, two or more distinct angular positions with respect to the advancing direction of the conveyor (14) in order to direct the rolls (22) of one and the same train towards one series or another of downstream conveyors (34) associated with the respective angular position, the downstream conveyors (34) conveying the rolls (22) towards a series of packaging stations (18) associated with the respective angular position.

3. Production and packaging unit (10) according to Claim 1, **characterized in that** the system of switches (37) comprises a series of guides in the form of fixed parallel vertical plates (36) spaced apart by the width of a roll (22), between which plates are perpendicularly arranged intermediate conveyors (38) which are able to rotate about a horizontal shaft (40), which are coplanar, and which are capable of simultaneously occupying, from one train of rolls (22) to the next, two or more different angular positions in order to direct the rolls (22) of one and the same train towards one or the other of two series of downstream conveyors (44), which are spread over two levels, each series of downstream conveyors (44) associated with each respective angular position conveying the rolls (22) towards a series of packaging stations (18) associated with the respective angular position.

4. Production and packaging unit (10) according to either one or Claims 2 and 3, **characterized in that** it comprises a control unit (UC) which receives information from elements of the production unit (10) and controls other elements of the production unit (10).

5. Production and packaging unit (10) according to Claim 4, **characterized in that** the control unit (UC) receives at least one signal (V₁₂) representing the speed of the rolls (22) leaving the cutting station (12), and a passage signal (P₁₂) indicating the passage of the trains of rolls (22).

6. Production unit (10) according to Claims 4 and 5, **characterized in that** the control unit (UC) calculates the distance between two successive trains of rolls (22) and then, under the action of an internal program (PROG), controls the angular position of the blades (28) or of the intermediate conveyors (37) and the speed of the upstream conveyor (14).

## Patentansprüche

1. Anlage (10) zum serienmäßigen Herstellen und Verpacken von rollenförmigen Gegenständen, insbesondere von Papier, des Typs, der von vorne nach hinten gesehen eine Schneidestation (12) umfasst, die dazu bestimmt ist, aufeinander folgende Rollenblöcke (20) von großer Länge und einem gegebenen Durchmesser in aufeinander folgende Reihen mehrerer Rollen (22) zu schneiden, und ein vorgeschaltetes Transportband (14) zum Befördern der Rollenreihen (22) von der Schneidestation (12) zu einer Verteilstation (16), die die Rollen (22) auf mehrere automatisierte Verpackungsstationen (18) verteilt, **dadurch gekennzeichnet, dass** ein Weichensystem (26, 37) der Verteilstation (16) es ermöglicht, jede Rollenreihe (22) mit fortlaufendem und gleichmäßigem Fluss zu einer bestimmten Reihe Verpackungsstationen (18) hin auszurichten, die sich von derjenigen unterscheidet, zu der die vorhergehende Rollenreihe (22) ausgerichtet worden ist, und **dadurch**, dass das vorgeschaltete Transportband (12) im Wesentlichen waagerecht ist und die Rollenreihen (22) unabhängig in einer gegebenen Richtung zieht, mit einer im Verhältnis zur Geschwindigkeit der Reihen am Ausgang der Schneidestation (12) geregelten Geschwindigkeit, um die Reihen mit einem minimalen Abstand zu trennen, was ihre Verteilung erleichtert.

2. Anlage (10) zum Herstellen und Verpacken nach Anspruch 1, **dadurch gekennzeichnet, dass** das Weichensystem eine Reihe senkrechter Lamellen (28) aufweist, die gleichzeitig um senkrechte parallele Achsen (30) drehbeweglich sind, die parallel zueinander und dazu geeignet sind, von einer Rollenreihe (22) zur nächsten im Verhältnis zur Fortbewegungsrichtung des Transportbands (14) zwei oder mehrere unterschiedliche Winkelpositionen einzunehmen, um die Rollen (22) einer gleichen Reihe zu einer Reihe oder einer anderen nachgeschalteter Transportbänder (34) hin auszurichten, die zu der betrachteten Winkelposition gehören, wobei die nachgeschalteten Transportbänder (34) die Rollen (22) zu einer Reihe Verpackungsstationen (18) hin befördern, die zu der betrachteten Winkelposition gehören.

3. Anlage (10) zum Herstellen und Verpacken nach Anspruch 1, **dadurch gekennzeichnet, dass** das Weichensystem (37) eine Reihe Führungen in Form senkrechter Platten (36) umfasst, feststehend, parallel und um die Länge einer Roller (22) beabstandet, zwischen denen senkrecht Zwischentransportbänder (38) angeordnet sind, die drehbeweglich um eine waagerechte Achse (40) herum sind, die koplanar und dazu geeignet sind, von einer Rollenreihe (22) zur nächsten gleichzeitig zwei oder mehrere unterschiedliche Winkelpositionen einzunehmen, um die Rollen (22) einer gleichen Reihe zu der einen oder anderen von zwei Reihen nachgeschalteter Transportbänder (44) hin auszurichten, die auf zwei Ebenen verteilt sind, wobei jede Reihe nachgeschalteter Transportbänder (44), die zu jeder betrachteten Winkelposition gehört, die Rollen (22) zu einer Reihe Verpackungsstationen (18) hin befördert, die zu der betrachteten Winkelposition gehört.

4. Anlage (10) zum Herstellen und Verpacken nach einem der Ansprüche 2 oder 3, **dadurch gekennzeichnet, dass** sie eine Steuereinheit (SE) umfasst, die Informationen von Elementen der Anlage (10) zum Herstellen erhält und andere Elemente der Anlage (10) zum Herstellen steuert.

5. Anlage (10) zum Herstellen und Verpacken nach Anspruch 4, **dadurch gekennzeichnet, dass** die Steuereinheit (SE) mindestens ein Signal (V₁₂) erhält, das die Geschwindigkeit der Rollen (22) am Ausgang der Schneidestation (12) darstellt, und ein Durchlaufsignal (P₁₂) von den Rollenreihen (22).

6. Anlage (10) zum Herstellen nach Anspruch 4 und 5, **dadurch gekennzeichnet, dass** die Steuereinheit (SE) die Entfernung zwischen zwei aufeinander folgenden Rollenreihen (22) berechnet und dann unter der Einwirkung eines internen Programms (PROG) die Winkelposition der Lamellen (28) oder der Zwischentransportbänder (37) sowie die Geschwindigkeit des vorgeschalteten Transportbands (14) steuert.
